# EUROPÄISCHE PATENTSCHRIFT

(11) **EP 4 251 451 B1**
(45) Veröffentlichungstag und Bekanntmachung des Hinweises auf die Patenterteilung: **03.04.2024**
(21) Anmeldenummer: 21790408.5
(22) Anmeldetag: 06.10.2021
(51) Int. Cl.: B60K 6/48, B60K 6/547, B60K 6/36, B60K 6/387, F16H 3/093, B60K 6/40, B60K 6/26

(54) **HYBRID-ANTRIEBSVORRICHTUNG**
HYBRID DRIVE UNIT
UNITÉ D'ENTRAÎNEMENT HYBRIDE

(30) Priorität: 30.11.2020 DE 102020007307
(43) Veröffentlichungstag der Anmeldung: 04.10.2023
(73) Patentinhaber: Mercedes-Benz Group AG, 70372 Stuttgart (DE)
(72) Erfinder: HAHN, Peter, 70374 Stuttgart (DE); GITT, Carsten, 70437 Stuttgart (DE)
(74) Vertreter: Novagraaf Group
(86) Internationale Anmeldenummer: PCT/EP2021/077569
(87) Internationale Veröffentlichungsnummer: WO 2022/111895

(56) Entgegenhaltungen:
- EP-A1- 2 902 236
- JP-A- 2002 031 198
- JP-A- 2014 054 900
- US-A- 5 799 536

## Beschreibung

Die Erfindung betrifft eine Hybrid-Antriebsvorrichtung mit einem Verbrennungsmotor, einer elektrischen Maschine und einem Getriebe nach der im Oberbegriff von Anspruch 1 näher definierten Art.

Hybridantriebsvorrichtungen sind unter anderem aus der DE 10 2012 009 484 B3, der FR 2 859 41 A1, der DE 10 2017 112 868 B3, der US 2017/0 305 258 A1 und der DE 10 2016 013 477 A1 bekannt.

Ferner beschreibt beispielsweise die DE 10 2013 210 013 A1 eine Hybrid-Antriebsvorrichtung, bei welcher die elektrische Maschine einerseits mit der Eingangswelle des Getriebes, jedoch auf der dem Verbrennungsmotor abgewandten Seite einer Trennkupplung verbunden werden kann, was gängiger Weise auch als P2-Anbindung bezeichnet wird, als auch mit einer als Abtriebswelle dienenden Vorgelegewelle, was wiederum als P3-Anbindung bezeichnet wird. Der Aufbau weist dabei vier Radebenen für vier einzelne Gänge auf. Die elektrische Maschine ist mit zwei Losrädern auf der Eingangswelle verbunden, welche ihrerseits mit jeweils einem weiteren Losrad auf der Vorgelegewelle eine Radpaarung ausbilden. Die elektrische Maschine lässt sich somit in der oben beschriebenen Art alternativ mit der Eingangswelle des Getriebes oder dessen Vorgelegewelle bzw. Abtriebswelle entsprechend koppeln. Ähnliche Hybridantriebsvorrichtungen sind durch die US 5 799 536 A, die JP 2002 031198 A1 und die EP 2 902 236 A1 gezeigt.

Der Aufbau ist dabei relativ groß, vor allem auch in axialer Richtung, also in der entlang der Eingangswelle beziehungsweise entlang einer Drehachse der Eingangswelle des Getriebes verlaufenden Richtung.

Die Aufgabe der hier vorliegenden Erfindung besteht nun darin, eine verbesserte Hybrid-Antriebsvorrichtung anzugeben, welche vor allem in axialer Richtung sehr kompakt baut, und welche darüber hinaus in der Lage ist, im Hybrid-Modus ohne vollständige Zugkraftunterbrechung zu schalten.

Erfindungsgemäß wird diese Aufgabe durch eine Hybrid-Antriebsvorrichtung mit den Merkmalen im Anspruch 1, und hier insbesondere im kennzeichnenden Teil des Anspruchs 1, gelöst. Vorteilhafte Ausgestaltungen und Weiterbildungen der erfindungsgemäßen Hybrid-Antriebsvorrichtung ergeben sich aus den hiervon abhängigen Unteransprüchen.

Die Hybrid-Antriebsvorrichtung umfasst neben dem Verbrennungsmotor eine elektrische Maschine sowie ein Getriebe. Das Getriebe umfasst eine Eingangswelle und wenigstens zwei Vorgelegewellen. Dabei sind sechs schaltbare Radpaarungen mit jeweils einem koaxial zu der Eingangswelle angeordneten Zahnrad vorgesehen. Unter einer Radpaarung im Sinne der Erfindung sind dabei zwei in Eingriff stehende Zahnräder zu verstehen, wobei eines von beiden koaxial zu der Eingangswelle und das andere der beiden koaxial zu einer der Vorgelegewellen angeordnet ist. Die beiden Zahnräder der Radpaarung sind in einer senkrecht zur Drehachse der Eingangswelle stehenden Radebene angeordnet.

Ferner sind in einer axialen Richtung, die hier immer auf die Drehachse der Eingangswelle bezogen ist, gesehen, eine erste schaltbare Radpaarung, eine erste Schaltelementebene, eine zweite schaltbare Radpaarung, eine dritte schaltbare Radpaarung, eine vierte schaltbare Radpaarung, eine zweite Schaltelementebene, eine fünfte schaltbare Radpaarung, eine sechste schaltbare Radpaarung und eine Abtriebsradebene in der genannten Reihenfolge nacheinander angeordnet.

In der Hybrid-Antriebsvorrichtung umfasst die erste Radpaarung zwei Losräder, davon eines auf der Eingangswelle. Ein zweites Losrad der beiden genannten Losräder ist erfindungsgemäß auf der ersten Vorgelegewelle angeordnet. Ferner ist erfindungsgemäß die elektrische Maschine derart an diese erste Radpaarung angebunden, dass Drehmomente ausgehend von der elektrischen Maschine über die erste Radpaarung in das Getriebe eingeleitet werden können. Durch die Ausgestaltung der ersten Radpaarung über zwei Losräder ist dabei sowohl eine P2-Anbindung als auch eine P3-Anbindung möglich.

Ferner ist erfindungsgemäß vorgesehen, dass die zweite Radpaarung ein koaxial zu der Eingangswelle angeordnetes drittes Zahnrad und ein koaxial zu der zweiten Vorgelegewelle angeordnetes viertes Zahnrad umfasst, die dritte Radpaarung ein koaxial zu der Eingangswelle angeordnetes fünftes Zahnrad und ein koaxial zu der zweiten Vorgelegewelle angeordnetes sechstes Zahnrad umfasst, die vierte Radpaarung ein koaxial zu der Eingangswelle angeordnetes siebtes Zahnrad und ein koaxial zu der ersten Vorgelegewelle angeordnetes achtes Zahnrad umfasst, die fünfte Radpaarung ein koaxial zu der Eingangswellen angeordnetes neuntes Zahnrad und ein koaxial zu der zweiten Vorgelegewelle angeordnetes zehntes Zahnrad umfasst und die sechste Radpaarung ein koaxial zu der Eingangswelle angeordnetes elftes Zahnrad und ein koaxial zu der ersten Vorgelegewelle angeordnetes zwölftes Zahnrad umfasst.

Dabei ist unter einem Schaltelement eine Vorrichtung zu verstehen, welche zum drehfesten Verbinden eines Losrades einer Radpaarung mit seiner es tragenden Welle vorgesehen ist, wobei das Schaltelement zumindest eine Schiebemuffe und eine Klauenverzahnung sowie in einer vorteilhaften Ausgestaltung ferner eine Synchronisiervorrichtung umfasst. Zwei benachbarte und koaxial zueinander angeordnete Schaltelemente können sich vorteilhaft ein und dieselbe Schiebemuffe teilen. Eine Schaltelementebene ist dabei eine Ebene, die senkrecht zu der Drehachse der Eingangswelle angeordnet ist und zumindest zwei Schaltelemente schneidet, wobei die zumindest zwei Schaltelemente koaxial zu unterschiedlichen Wellen angeordnet sind, wobei unter den Wellen die Eingangswelle, die erste Vorgelegewelle und die zweite Vorgelegewelle verstanden werden.

Damit, dass eine Schaltelementebene ein Schaltelement "umfasst" ist gemeint, dass diese Schaltelementebene zumindest einen Teil dieses Schaltelementes schneidet. Analog dazu ist eine Abtriebsradebene eine senkrecht zu der Drehachse der Eingangswelle angeordnete Ebene, welche die drehfest auf den Vorgelegewellen angeordneten Abtriebsräder umfasst.

Drehfest im Sinne der Erfindung bedeutet dabei, dass die so verbundenen koaxial zueinander angeordneten Elemente mit der selben Winkelgeschwindigkeit bzw. Drehzahl umlaufen.

Unter einem Losrad, beziehungsweise unter dem Ausdruck eines "Losrades auf einer Welle", ist ein Zahnrad zu verstehen, das koaxial zu der Welle und drehbar zu dieser Welle angeordnet ist. Ein Losrad kann in der Regel mittels eines Schaltelementes drehfest mit dieser Welle verbunden werden. Unter einem Festrad, beziehungsweise unter dem Ausdruck eines "Festrades auf einer Welle", ist im Folgenden ein Zahnrad zu verstehen, das koaxial zu der Welle angeordnet ist und permanent drehfest mit dieser Welle verbunden ist.

Die erfindungsgemäße Hybrid-Antriebsvorrichtung kann so eine sehr kompakte Bauweise, vor allem in axialer Richtung, erreichen. Durch die spezielle Radsatzarchitektur ist dies bei sehr geringen Kosten möglich. Außerdem ist, trotz des einfachen Aufbaus, die volle Funktionalität und ein hoher Komfort bei den Schaltungen gegeben, insbesondere kann ohne Zugkraftunterbrechung geschaltet werden.

Die erste Radpaarung ist dabei gemäß einer außerordentlich günstigen Weiterbildung der Erfindung entlang der Eingangswelle von der Trennkupplung aus gesehen in der letzten Radebene angeordnet.

Gemäß einer sehr vorteilhaften Weiterbildung der Erfindung ist es ferner so, dass die elektrische Maschine in axialer Richtung die Trennkupplung überlappt. Die überlappende Anordnung im Sinne der Erfindung bedeutet dabei, dass die genannten Elemente von derselben axialen Ebene geschnitten werden beziehungsweise in axialer Richtung in dieselbe axiale Ebene hineinragen. Somit überlappen die genannten Elemente in axialer Richtung zumindest teilweise. Unter einer axiale Ebene wird eine auf der Drehachse der Eingangswelle senkrecht stehende Ebene verstanden.

Die Hybrid-Antriebsvorrichtung gemäß der Erfindung kann dabei vorzugsweise auf eine anfahrfähige Trennkupplung sowie insbesondere auch auf einen mechanischen Rückwärtsgang verzichten. Hierdurch lässt sich der Durchmesser der Trennkupplung entsprechend gering auslegen, sodass diese platzsparend überlappend zu der elektrischen Maschine und gemäß einer außerordentlich günstigen Weiterbildung hierzu überlappend zu wenigstens zwei Abtriebsrädern auf den wenigstens zwei Vorgelegewelle angeordnet sein kann.

Diese Variante und hier insbesondere die Kombination der beiden zuletzt genannten Ausgestaltungen stellen einen noch kompakteren Aufbau sicher.

In einem Hybrid-Fahrzeug mit der erfindungsgemäßen Hybrid-Antriebsvorrichtung ist es dann möglich, dass diese zusammen mit einer weiteren rein elektrisch angetriebenen Achse zum Antrieb einer über die Hybrid-Antriebsvorrichtung angetriebenen Achse eingesetzt wird. Anfahrvorgänge sowie eine Rückwärtsfahrt können dann rein elektrisch mit einer oder auch beiden elektrischen Maschinen, also der der erfindungsgemäßen Hybrid-Antriebsvorrichtung und der der weiteren rein elektrisch angetriebenen Achse, realisiert werden. Die Schaltungen innerhalb des Getriebes können für den Fall des Antriebs über den Verbrennungsmotor oder den Verbrennungsmotor und die elektrische Maschine ohne Lastunterbrechung erfolgen, indem die elektrische Maschine in der P3-Anbindung während der Schaltung die Drehzahlen und Drehmomente entsprechend ausgleicht bzw. stützt.

Gemäß einer weiteren sehr günstigen Ausgestaltung der Erfindung ist es ergänzend vorgesehen, dass die erste Schaltelementebene zumindest ein koaxial zu der ersten Vorgelegewelle angeordnetes drittes Schaltelement sowie ein koaxial zu der Eingangswelle angeordnetes erstes Schaltelement umfasst, und dass die zweite Schaltelementebene zumindest ein koaxial zu der zweiten Vorgelegewelle angeordnetes fünftes Schaltelement und ein koaxial zu der ersten Vorgelegewelle angeordnetes sechstes Schaltelement umfasst.

Als weitere vorteilhafte Ergänzung dieser Ausführungsform kann es dann außerdem noch vorgesehen sein, dass das erste Schaltelement zur drehfesten Verbindung des ersten Zahnrades mit der Eingangswelle vorgesehen ist, das dritte Schaltelement zur drehfesten Verbindung des zweiten Zahnrades mit der ersten Vorgelegewelle vorgesehen ist, das vierte Schaltelement zur drehfesten Verbindung des sechsten Zahnrades mit der zweiten Vorgelegewelle vorgesehen ist, das fünfte Schaltelement zur drehfesten Verbindung des zehnten Zahnrades mit der zweiten Vorgelegewelle vorgesehen ist, das sechste Schaltelement zur drehfesten Verbindung des achten Zahnrades mit der ersten Vorgelegewelle vorgesehen ist und das siebte Schaltelement zur drehfesten Verbindung des zwölften Zahnrades mit der zweiten Vorgelegewelle vorgesehen ist.

Vorzugsweise können dabei das vierte Schaltelement und das fünfte Schaltelement sowie das sechste Schaltelement und das siebte Schaltelement jeweils als Schaltelemente mit einer gemeinsamen Schiebemuffe ausgebildet sind. Damit wird das Getriebe noch günstiger und kompakter in seinem Aufbau.

Eine sehr günstige Ausgestaltung der erfindungsgemäßen Hybrid-Antriebsvorrichtung kann darüber hinaus vorsehen, dass die erste Radpaarung, die zweite Radpaarung, die dritte Radpaarung und die sechste Radpaarung jeweils eine zugehörige reine Radebene bilden. Dabei ist unter einer reinen Radebene eine senkrecht auf der Drehachse der Eingangswelle stehende Ebene zu verstehen die nur eine Radpaarung, nicht jedoch ein Schaltelement schneidet. Auch dies trägt zur kompakten Ausgestaltung bei.

Weitere vorteilhafte Ausgestaltungen und Weiterbildungen der erfindungsgemäßen Hybrid-Antriebsvorrichtung ergeben sich auch aus den Ausführungsbeispielen, welche nachfolgend unter Bezugnahme auf die Figuren näher dargestellt sind.

Dabei zeigen:
- Fig. 1: eine erste mögliche Variante der erfindungsgemäßen Hybrid-Antriebsvorrichtung; und
- Fig. 2: eine zweite mögliche Variante der erfindungsgemäßen Hybrid-Antriebsvorrichtung.

In den beiden Figuren ist schematisch jeweils eine Hybrid-Antriebsvorrichtung 101, 102 in einem möglichen erfindungsgemäßen Aufbau dargestellt. Die Radsatzpläne, welche zur Darstellung des darin verbauten Getriebes dienen, sind dabei weder maßstäblich zu verstehen noch liegen alle Bauteile zwingend in der Blattebene, in der sie dargestellt sind. Auch die dargestellten Größenordnungen der Komponenten zueinander müssen dabei nicht dem realen Aufbau entsprechen.

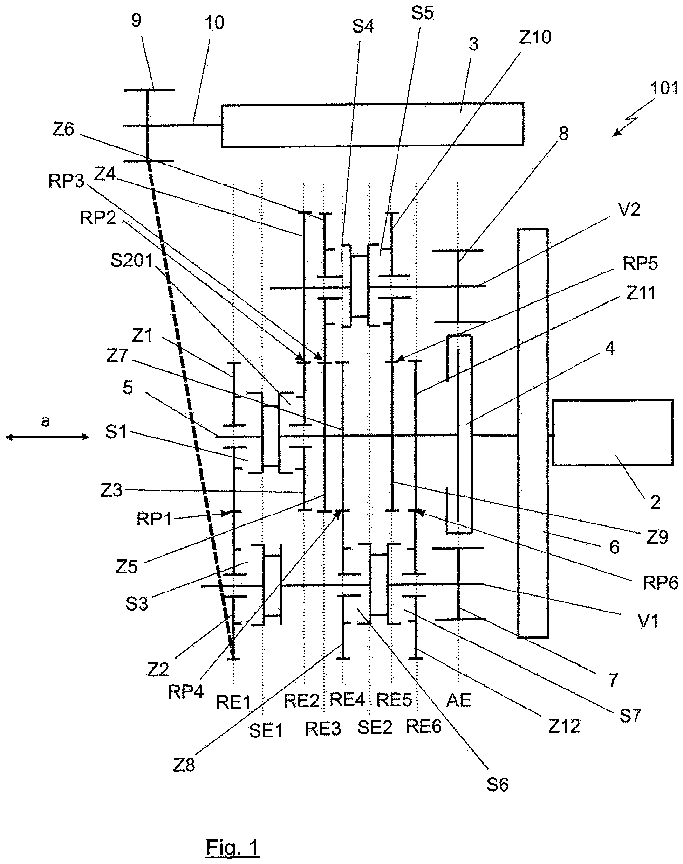

Figur 1 zeigt eine erste Variante der Hybrid-Antriebsvorrichtung 101, welche einerseits einen Verbrennungsmotor 2 und andererseits ist eine elektrische Maschine 3 umfasst. Der Verbrennungsmotor 2 ist über eine Trennkupplung 4 mit einer Eingangswelle 5 eines Getriebes der Hybrid-Antriebsvorrichtung 101 direkt verbunden. Die direkte Verbindung kann dabei optional eine Einrichtung 6 zur Tilgung und/oder Dämpfung von Drehschwingungen, beispielsweise ein Zweimassenschwungrad, zwischen einer Kurbelwelle des Verbrennungsmotors 2 und der Trennkupplung 4 umfassen, sodass "direkt" hier in der Art zu verstehen ist, dass keine weiteren Getriebeelemente wie Kupplungen, Übersetzungen oder dergleichen zwischen der Kurbelwelle des Verbrennungsmotors 2 und der Trennkupplung 4 angeordnet sind.

In axialer Richtung a der Drehachse der Eingangswelle 5 folgen von der Trennkupplung 4 aus gesehen sechs Radpaarungen, eine erste Radpaarung RP1, eine zweite Radpaarung RP2, eine dritte Radpaarung RP3, eine vierte Radpaarung RP4, eine fünfte Radpaarung RP5 und eine sechste Radpaarung RP6 in jeweils einer zugehörigen Radebene, nämlich einer ersten Radebene RE1 bis zu einer sechsten Radebene RE 6. Von sechs jeweils koaxial zu der Eingangswelle 5 angeordneten Zahnrädern, nämlich einem der sechsten Radpaarung RP6 zugehörigen elften Zahnrad Z11, einem der fünften Radpaarung RP5 zugehörigen neunten Zahnrad Z9, einem der vierten Radpaarung RP4 zugeordneten siebten Zahnrad Z7, einem der dritten Radpaarung RP3 zugeordneten fünften Zahnrad Z5, einem der zweiten Radpaarung RP2 zugeordneten dritten Zahnrad Z3 und einem der ersten Radpaarung RP1 zugeordneten ersten Zahnrad Z1 sind dabei die aus Richtung der Trennkupplung 4 gesehen ersten vier Zahnräder Z11, Z9, Z7 und Z5 jeweils als Festräder auf der Eingangswelle 5 ausgebildet, während die beiden letzten Zahnräder Z3 und Z1 als Losräder ausgebildet sind. Über zwei Schaltelemente, nämlich einem ersten Schaltelement S1 für das erste Zahnrad Z1 und einem zweiten Schaltelement S201 für das dritte Zahnrad Z3, können das erste Zahnrad Z1 und das dritte Zahnrad Z3 jeweils drehfest mit der Eingangswelle 5 verbunden werden. Die beiden Schaltelemente S1, S201 sind dabei so angeordnet und zusammengefasst, dass sie mit einer gemeinsamen Schiebemuffe auskommen.

Jeweils parallel zu der Eingangswelle 5 sind zwei Vorgelegewellen, nämlich eine erste Vorgelegewelle V1 und eine zweite Vorgelegewelle V2 angeordnet. Ein erstes Abtriebsrad 7 ist koaxial zu der ersten Vorgelegewelle V1 angeordnet und drehfest mit dieser verbunden. Ein zweites Abtriebsrad 8 ist koaxial zu der zweiten Vorgelegewelle V2 angeordnet und drehfest mit dieser verbunden. Die Abtriebsräder 7, 8 kämmen vorteilhaft ohne weitere zwischengeschaltete Getriebeelemente mit einem hier nicht dargestellten Differentialrad (d.h. einem Eingangszahnrad eines Differenzialgetriebes). Hier vorteilhaft sind die Abtriebsräder 7, 8 in einer gemeinsamen Abtriebsradebene AE mit der Trennkupplung 4 angeordnet. Die Abtriebsradebene AE ist senkrecht zu der axialen Richtung a angeordnet und schneidet sowohl die beiden Abtriebsräder 7, 8 als auch die Trennkupplung 4.

Die erste Radpaarung RP1 ist dabei die in axialer Richtung a von der Trennkupplung 4 aus gesehen letzte Radpaarung RP1 und damit in der in dieser Richtung gesehen letzten Radebene RE1 angeordnet. Sie umfasst das erste Zahnrad Z1, welches als Losrad auf der Eingangswelle 5 ausgebildet ist, und ein zweites Zahnrad Z2, welches ebenfalls als Losrad ausgebildet ist und koaxial zu der ersten Vorgelegewelle V1 angeordnet ist. Das erste Zahnrad Z1 ist wie bereits erwähnt über das erste Schaltelement S1 drehfest mit der Eingangswelle 5 verbindbar, das zweite Zahnrad Z2 ist über ein drittes Schaltelement S3 mit der ersten Vorgelegewelle V1 bei Bedarf drehfest verbindbar. Die Anbindung der elektrischen Maschine 3 erfolgt dann über ein Ritzel 9, welches drehfest mit einer Rotorwelle 10 der elektrischen Maschine 3 verbunden ist, an der ersten Radpaarung RP1. Dazu kämmt das Ritzel 9, wie es in der Darstellung der Figur 1 durch die gestrichelte Linie angedeutet ist, mit dem zweiten Zahnrad Z2 der ersten Radpaarung RP1. Alternativ und nicht dargestellt kann das Ritzel 9 auch mit dem ersten Zahnrad Z1 kämmen. Vorteilhaft ist zwischen dem Ritzel 9 und dem jeweiligen Losrad noch ein Zwischenrad beziehungsweise eine Zwischenwelle angeordnet.

Damit kann Drehmoment von der elektrischen Maschine 3 in das Getriebe eingeleitet werden. Je nach Stellung der Schaltelemente S1, S3 lässt sich dabei eine sogenannte P2-Anbindung realisieren, bei welcher die elektrische Maschine 3 über das Ritzel 9 und das lose auf der ersten Vorgelegewelle V1 umlaufende Losrad Z2 der ersten Radpaarung RP1 und das mit der Eingangswelle 5 über das erste Schaltelement S1 dann drehfest gekoppelte erste Zahnrad Z1 auf die Eingangswelle 5, und zwar auf der dem Verbrennungsmotor 2 abgewandten Seite der Trennkupplung 4, wirkt. Je nach Schaltstellung innerhalb des Getriebes erfolgt dann der Abtrieb über die erste Vorgelegewelle V1 und deren Abtriebsrad 7 oder die zweite Vorgelegewelle V2 und deren Abtriebsrad 8.

Alternativ dazu kann der Aufbau zu einer sogenannten P3-Anbindung der elektrischen Maschine 3 umgeschaltet werden, in dem bei geöffnetem Schaltelement S1 und dementsprechend auf der Eingangswelle 5 umlaufendem Losrad Z1 und mit der ersten Vorgelegewelle V1 über das dritte Schaltelement S3 dann drehfest gekoppeltem zweite Zahnrad Z2 der ersten Radpaarung PR1 die erste Vorgelegewelle V1 und damit ihr Abtriebsrad 7 direkt von der elektrischen Maschine 3 angetrieben wird.

Indem das Getriebe neutral geschaltet ist (kein Losrad gekoppelt), kann die elektrische Maschine 3 zum Beispiel den Verbrennungsmotor 2 starten, oder der Verbrennungsmotor 2 treibt die elektrische Maschine 3 als Generator an.

Die elektrische Maschine 3 ist dabei in axialer Richtung a überlappend zu der Trennkupplung 4 und damit insbesondere auch zu den Abtriebsrädern 7, 8 der Vorgelegewellen V1, V2 angeordnet. Durch die Anbindung der elektrische Maschine 3 an die letzte Radebene RE1 in axialer Richtung a von der Trennkupplung 4 aus gesehen und ihre gleichzeitige axiale Überlappung mit der Trennkupplung 4, also ein Hineinragen in die gemeinsame Abtriebsradebene AE der Trennkupplung 4 und insbesondere der Abtriebsräder 7, 8 wird ein außerordentlich kompakter Aufbau gewährleistet.

In axialer Richtung a, dieses mal von der Radebene RE1 mit der Radpaarung RP1 in Richtung der Trennkupplung 4 gesehen, folgt auf die erste Radpaarung RP1 die zweite Radpaarung RP2 mit dem dritten Zahnrad Z3, welches ebenfalls als Losrad auf der Eingangswelle 5 ausgebildet ist. Dieses ist über das zweite Schaltelement S201 vergleichbar wie das erste Zahnrad Z1 schaltbar, wobei vorteilhaft die Schaltelemente S1 und S201 mit einer gemeinsamen Schiebemuffe ausgebildet sein können, sodass hier eine Art Doppelschaltelement entsteht, was Bauraum und insbesondere Kosten einspart. Als weiteres Zahnrad der zweiten Radpaarung RP2 dient ein viertes Zahnrad Z4, welches als Festrad auf der zweiten Vorgelegewelle V2 ausgebildet ist. In der Darstellung der Figur 1 rechts neben dieser zweiten Radpaarung RP2 folgt die dritte Radpaarung RP3, bei welcher das fünfte Zahnrad Z5 als Festrad auf der Eingangswelle 5 und das sechste Zahnrad Z6 als Losrad auf der zweiten Vorgelegewelle V2 ausgebildet ist. Daneben ist in der vierten Radebene RE4 die vierte Radpaarung RP4 angeordnet. Das siebte Zahnrad Z7 ist als Festrad auf der Eingangswelle 5 ausgebildet, das achte Zahnrad Z8 dieser vierten Radpaarung RP4 ist als Losrad, diesmal auf der ersten Vorgelegewelle V1, ausgebildet.

Die fünfte Radpaarung RP5 ist dann in der fünften Radebene RE5 ausgebildet. Sie ist wiederum mit einem Losrad, dem zehnten Zahnrad Z10, auf der Vorgelegewelle 2 und einem Festrad, dem neunten Zahnrad Z9, auf der Eingangswelle 5 ausgebildet. Dadurch, dass die vierte Radebene RE4 ihr als Abtriebsrad dienendes achtes Zahnrad Z8 auf der ersten Vorgelegewelle V1 aufweist, entsteht auf der zweiten Vorgelegewelle V2 nun ausreichend Platz, sodass ein viertes Schaltelement S4 für das sechste Zahnrad Z6 der dritten Radpaarung RP3 und ein fünftes Schaltelement S5 für das zehnte Zahnrad Z10, also das Abtriebsrad der fünften Radpaarung RP5, so nebeneinander platziert werden können, dass auch diese beiden Schaltelemente S4, S5 mit einer gemeinsamen Schiebemuffe als Doppelschaltelement realisiert werden können. Die sechste Radpaarung RP6 in der sechsten Radebene RE6 ist wiederum mit einem Festrad, dem elften Zahnrad Z11, auf der Eingangswelle 5 und einem Losrad, dem zwölften Zahnrad Z12, auf der ersten Vorgelegewelle V1 angeordnet. Das zugehörige Schaltelement, ein siebtes Schaltelement S7, kann dann so neben einem sechsten Schaltelement S6 für die vierte Radpaarung RP4 positioniert werden, dass auch diese in dem durch die fünfte Radpaarung RP5, welche zur zweiten Vorgelegewelle V2 hin abtreibt, geschaffenen Bauraum liegt. Auch hier können die beiden Schaltelemente S6, S7 dann mit einer gemeinsamen Schiebemuffe in der Art eines Doppelschaltelements ausgebildet werden. An diese sechste Radebene RE6 schließt sich dann die oben bereits angesprochene Abtriebsradebene AE an, in welcher zumindest die beiden Abtriebsräder 7, 8 der Vorgelegewellen V1, V2 liegen, und in welcher vorzugsweise, und so ist es hier dargestellt, auch die Trennkupplung 4 entsprechend angeordnet ist. Die elektrische Maschine 3 überlappt diese Abtriebsradebene AE ebenfalls in axialer Richtung a.

Zwischen der ersten Radebene RE1 und der zweiten Radebene RE2 liegt dann eine erste Schaltelementebene SE1 mit dem koaxial zur ersten Vorgelegewelle V1 angeordneten dritten Schaltelement S3 und dem koaxial zur Eingangswelle 5 angeordneten ersten Schaltelement S1. Eine zweite Schaltelementebene SE2 liegt zwischen der vierten Radebene RE4 und der fünften Radebene RE5 und umfasst das fünfte Schaltelement S5 sowie das sechste Schaltelement S6, während das vierte Schaltelement S4 und das siebte Schaltelement S7 jeweils in der vierten Radebene RE4 bzw. der fünften Radebene RE5 angeordnet sind.

Mit dem Begriff der "Schaltelementebene" ist eine Ebene gemeint, die senkrecht zu der axialen Richtung a angeordnet ist, und die diejenigen Schaltelemente, welche zu ihr gehören oder von ihr "umfasst" werden, schneidet.

Das Getriebe der Hybrid-Antriebsvorrichtung 101 kann dabei vorteilhaft so ausgestaltet sein, dass es als Sechsganggetriebe ohne mechanischen Rückwärtsgang genutzt wird. Insbesondere erfolgt eine Rückwärtsfahrt also über die elektrische Maschine 3. Diese kann auch für das Anfahren genutzt werden, um mit einer entsprechend kleinen Trennkupplung 4 auszukommen, welche in diesem Fall nicht anfahrfähig sein muss. Sie lässt sich dann so klein gestalten, dass sie, wie es in der Darstellung der Figur 1 angedeutet ist, zusammen mit den Abtriebsrädern 7, 8 der Vorgelegewellen V1, V2 in der Abtriebsradebene AE liegt.

Die Übersetzungen können dabei so ausgebildet sein, dass über die vierte Radpaarung RP4 und über die fünfte Radpaarung RP5 wechselseitig ein erster oder ein zweiter Gang des Getriebes dargestellt werden. Die erste Radpaarung RP1 dient dann zur Realisierung eines dritten Gangs, die dritte Radpaarung RP3 sowie die sechste Radpaarung RP6 können zur Realisierung von Gängen vier, fünf oder sechs herangezogen werden, wobei zur Realisierung des fünften oder sechsten Ganges zusätzlich die zweite Radpaarung RP2 entsprechend genutzt wird.

Mit dem Begriff "Gang" bzw. mit dem Begriff "Gänge" sind einstellbare Übersetzungsstufen gemeint, bei denen eine Getriebeübersetzung in der Reihe von dem ersten Gang bis zu dem sechsten Gang stetig abnimmt.

Ein konkretes Beispiel dieser beschriebenen Ausgestaltung könnte es also vorsehen, dass der erste Gang durch die fünfte Radpaarung RP5, der zweite Gang durch die vierte Radpaarung RP4, der dritte Gang durch die erste Radpaarung RP1, der vierte Gang durch die sechste Radpaarung RP6, der fünfte Gange durch die dritte Radpaarung RP3 und der sechste Gang durch die zweite Radpaarung RP2 realisiert wird.

Alternativ dazu kann mit der Ausgestaltung der Hybrid-Antriebsvorrichtung 101 in der Ausführungsvariante gemäß Figur 1 mit der ersten Radebene RE1 auch der vierte Gang, mit der zweiten Radebene RE2 wechselweise der zweite oder sechste Gang, mit der vierten Radebene RE4 dementsprechend wechselweise der erste, zweite oder dritte Gang ebenso wie mit der fünften Radebene RE5 realisiert werden. Mit der dritten und der sechsten Radebene RE3, RE6 lassen sich dann wechselweise die restlichen Gänge realisieren. Ein konkretes Ausführungsbeispiel hier könnte insbesondere in der Art gestaltet werden, dass der erste Gang über die fünfte Radpaarung RP5, der zweite Gang über die vierte Radpaarung RP4, der dritte Gang über die dritte Radpaarung RP3 und der vierte Gang über die erste Radpaarung RP1 realisiert werden. Der fünfte Gang könnte dann über die sechste Radpaarung RP6 und der sechste Gang dementsprechend über die zweite Radpaarung RP2 realisiert werden.

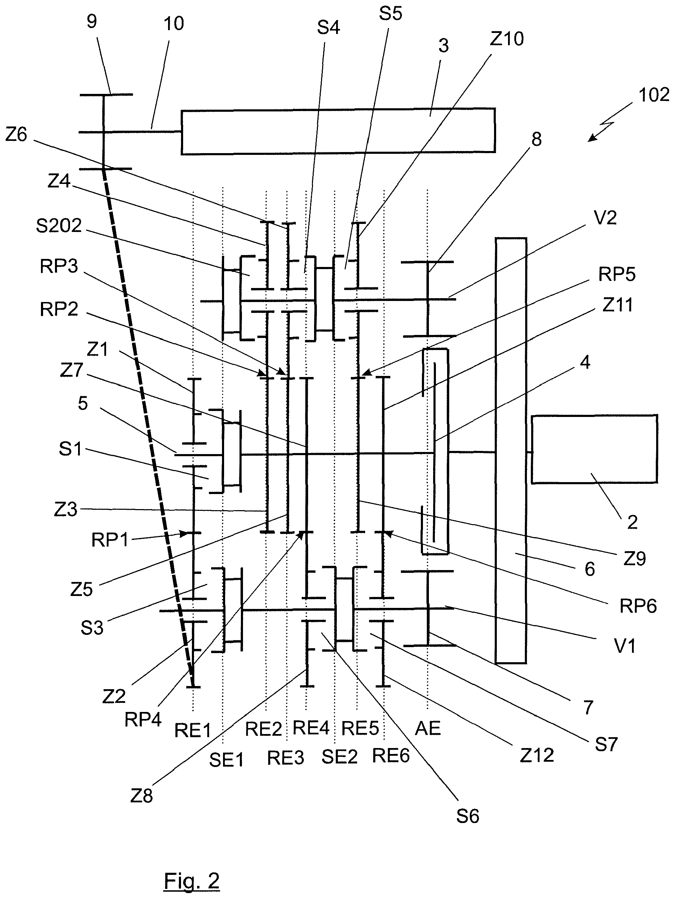

In der Darstellung der Figur 2 ist eine alternative Variante der Hybrid-Antriebsvorrichtung 102 dargestellt. Der Unterscheid besteht darin, dass das zweite Schaltelement S201 von der Eingangswelle 5 zur zweiten Vorgelegewelle V2 wechselt. Die zweite Radpaarung RP2 besitzt nun also als drittes Zahnrad Z3 ebenfalls ein Festrad auf der Eingangswelle 5 wie die Radpaarungen RP3 bis RP6. Das vierte Zahnrad Z4 ist nun ein Losrad auf der zweiten Vorgelegewelle V2, welches über ein zweites Schaltelement 202 wahlweise freigegeben oder drehfest mit der zweiten Vorgelegewelle V2 verbunden werden kann. Dieses nun zur zweiten Vorgelegewelle V2 "gewanderte" zweite Schaltelement S202 wandert bei dieser Ausgestaltung der Hybrid-Antriebsvorrichtung 102 zusätzlich zu dem ersten Schaltelement S1 und dem dritten Schaltelement S3 in die erste Schaltelementebene SE1, sodass der Aufbau nochmals kompakter wird. Der weitere Aufbau der Hybrid-Antriebsvorrichtung 102 ist analog zum bereits beschriebenen Aufbau der Hybrid-Antriebsvorrichtung 101 der vorhergehenden Figur.

Dabei kann es vorsehen sein, dass wiederum die vierte und die fünfte Radebene RE4, RE5 wechselweise für den ersten und zweiten Gang genutzt werden, die erste Radebene RE1 für den dritten Gang, die zweite Radebene RE2 für den Gang zwei oder vier und die dritte Radebene RE3 ebenso wie die sechste Radebene RE6 wechselweise für die Gänge 4, 5 oder 6. Für diese Konstellation könnte ein konkretes Beispiel so aussehen, dass der erste Gang über die fünfte Radpaarung RP5, der zweite Gang über die vierte Radpaarung RP4, der dritte Gang über die erste Radpaarung RP1, der vierte Gang über die zweite Radpaarung RP2, der fünfte Gang über die dritte Radpaarung RP3 und der sechste Gang über die sechste Radpaarung RP6 realisiert wird.

In einer weiteren Variante der Hybrid-Antriebsvorrichtung 102 könnte es auch vorgesehen sein, dass über die vierte Radebene RE4 und die fünfte Radebene RE5 wechselweise die Gänge 1, 2 und/oder 3 realisiert werden, über die zweite Radebene RE2 dann dementsprechend wechselweise die Gänge 3 oder 5 und über die erste Radebene RE1 der vierte Gang. Über die dritte und die sechste Radebene RE3, RE6 ließen sich dann wechselweise die restlichen Gänge umsetzen. Hier könnte ein konkretes Ausführungsbeispiel wieder so aussehen, dass der erste Gang über die Radebene RE5, also die fünfte Radpaarung RP5 realisiert wird, der zweite Gang über die vierte Radpaarung RP4, der dritte Gang über die dritte Radpaarung RP3, der vierte Gang über die erste Radpaarung RP1, der fünfte Gang über die zweite Radpaarung RP2 und der sechste Gang über die sechste Radpaarung RP6.

Alle Varianten der Hybrid-Antriebsvorrichtung 101, 102 gemäß den Figuren 1 und 2 erlauben es dabei sechs Gänge ohne einen mechanischen Rückwärtsgang zu realisieren. Die Hybrid-Antriebsvorrichtung 101, 102 kann vorzugsweise zum Antrieb einer ersten angetriebenen Achse eines Fahrzeugs eingesetzt werden, bei welchem eine zweite angetriebene Achse rein elektrisch angetrieben ist. Das Fahrzeug könnte dann prinzipiell über weitere angetriebene oder nicht angetriebene Achsen verfügen, wobei der Aufbau als Pkw typischerweise zwei Achsen vorsieht. Ein solcher Hybrid-Pkw ist dabei der bevorzugte, nicht jedoch ausschließliche Einsatzzweck der Hybrid-Antriebsvorrichtung 101, 102.

## Patentansprüche

1. Hybrid-Antriebsvorrichtung (101, 102) mit einem Verbrennungsmotor (2), einer elektrischen Maschine (3) und einem Getriebe, wobei
das Getriebe eine Eingangswelle (5) und wenigstens eine erste Vorgelegewelle (V1) und eine zweite Vorgelegewelle (V2) aufweist, wobei der Verbrennungsmotor (2) über eine Trennkupplung (4) mit der Eingangswelle (5) direkt koppelbar ist, wobei
sechs schaltbare Radpaarungen, nämlich eine erste Radpaarung (RP1), eine zweite Radpaarung (RP2), eine dritte Radpaarung (RP3), eine vierte Radpaarung (RP4), eine fünfte Radpaarung (RP5) und eine sechste Radpaarung (RP6), mit jeweils einem koaxial zu der Eingangswelle (5) angeordneten Zahnrad (Z1, Z3, Z5, Z7, Z9, Z11) vorgesehen sind, wobei
die erste Radpaarung (RP1) ein als Losrad ausgebildetes und koaxial zu der Eingangswelle (5) angeordnetes erstes Zahnrad (Z1) aufweist, wobei in einer axialen Richtung (a) gesehen die erste schaltbare Radpaarung (RP1), eine erste Schaltelementebene (SE1), die zweite schaltbare Radpaarung (RP2), die dritte schaltbare Radpaarung (RP3), die vierte schaltbare Radpaarung (RP4), eine zweite Schaltelementebene (SE2), die fünfte schaltbare Radpaarung (RP5), die sechste schaltbare Radpaarung (RP6) und eine Abtriebsradebene (AE) in der genannten Reihenfolge nacheinander angeordnet sind,
**dadurch gekennzeichnet, dass**
die erste Radpaarung (RP1) ein als Losrad ausgebildetes und koaxial zu der ersten Vorgelegewelle (V1) angeordnetes zweites Zahnrad (Z2) aufweist, wobei die elektrische Maschine (3) derart an die erste Radpaarung (RP1) angebunden ist, dass Drehmomente, ausgehend von der elektrischen Maschine (3) über die erste Radpaarung (RP1) in das Getriebe eingeleitet werden können, wobei die zweite Radpaarung (RP2) ein koaxial zu der Eingangswelle (5) angeordnetes drittes Zahnrad (Z3) und ein koaxial zu der zweiten Vorgelegewelle (V2) angeordnetes viertes Zahnrad (Z4) umfasst, die dritte Radpaarung (RP3) ein koaxial zu der Eingangswelle (5) angeordnetes fünftes Zahnrad (Z5) und ein koaxial zu der zweiten Vorgelegewelle (V2) angeordnetes sechstes Zahnrad (Z6) umfasst, die vierte Radpaarung (RP4) ein koaxial zu der Eingangswelle (5) angeordnetes siebtes Zahnrad (Z7) und ein koaxial zu der ersten Vorgelegewelle (V1) angeordnetes achtes Zahnrad (Z8) umfasst, die fünfte Radpaarung (RP5) ein koaxial zu der Eingangswelle (5) angeordnetes neuntes Zahnrad (Z9) und ein koaxial zu der zweiten Vorgelegewelle (V2) angeordnetes zehntes Zahnrad (Z10) umfasst und die sechste Radpaarung (RP6) ein koaxial zu der Eingangswelle (5) angeordnetes elftes Zahnrad (Z11) und ein koaxial zu der ersten Vorgelegewelle (V1) angeordnetes zwölftes Zahnrad (Z12) umfasst.

2. Hybrid-Antriebsvorrichtung (101, 102) nach Anspruch 1,
**dadurch gekennzeichnet, dass**
die erste Radpaarung (RP1) in axialer Richtung (a) und von der Trennkupplung (4) aus gesehen in einer letzten Radebene (RE1) angeordnet ist.

3. Hybrid-Antriebsvorrichtung (101, 102) nach Anspruch 1 oder 2,
**dadurch gekennzeichnet, dass**
die elektrische Maschine (3) axial überlappend zu der Trennkupplung (4) angeordnet ist.

4. Hybrid-Antriebsvorrichtung (101, 102) nach Anspruch 1, 2 oder 3,
**dadurch gekennzeichnet, dass**
die erste Schaltelementebene (SE1) zumindest ein koaxial zu der ersten Vorgelegewelle (V1) angeordnetes drittes Schaltelement (S3) sowie ein koaxial zu der Eingangswelle (5) angeordnetes erstes Schaltelement (S1) umfasst, und dass die zweite Schaltelementebene (SE2) zumindest ein koaxial zu der zweiten Vorgelegewelle (V2) angeordnetes fünftes Schaltelement (S5) und ein koaxial zu der ersten Vorgelegewelle (V1) angeordnetes sechstes Schaltelement (S6) umfasst.

5. Hybrid-Antriebsvorrichtung (101, 102) nach Anspruch 4,
**dadurch gekennzeichnet, dass**
das erste Schaltelement (S1) zur drehfesten Verbindung des ersten Zahnrads (Z1) mit der Eingangswelle (5) vorgesehen ist, das dritte Schaltelement (S3) zur drehfesten Verbindung des zweiten Zahnrads (Z2) mit der ersten Vorgelegewelle (V1) vorgesehen ist, das vierte Schaltelement (S4) zur drehfesten Verbindung des sechsten Zahnrads (Z6) mit der zweiten Vorgelegewelle (V2) vorgesehen ist, das fünfte Schaltelement (S5) zur drehfesten Verbindung des zehnten Zahnrads (Z10) mit der zweiten Vorgelegewelle (V2) vorgesehen ist, das sechste Schaltelement (S6) zur drehfesten Verbindung des achten Zahnrads (Z8) mit der ersten Vorgelegewelle (V1) vorgesehen ist und das siebte Schaltelement (S7) zur drehfesten Verbindung des zwölften Zahnrads (Z12) mit der ersten Vorgelegewelle (V1) vorgesehen ist.

6. Hybrid-Antriebsvorrichtung (101, 102) nach Anspruch 5,
**dadurch gekennzeichnet, dass**
das vierte Schaltelement (S4) und das fünfte Schaltelement (S5) sowie das sechste Schaltelement (S6) und das siebte Schaltelement (S7) jeweils als Schaltelemente mit einer gemeinsamen Schiebemuffe ausgebildet sind.

7. Hybrid-Antriebsvorrichtung (101, 102) nach einem der Ansprüche 1 bis 6, **dadurch gekennzeichnet, dass**
die erste Radpaarung (RP1), die zweite Radpaarung (RP2), die dritte Radpaarung (RP3) und die sechste Radpaarung (RP6) jeweils eine zugehörige reine Radebene (RE1, RE2, RE3, RE6) bilden.

8. Hybrid-Antriebsvorrichtung (101, 102) nach einem der Ansprüche 1 bis 7, **dadurch gekennzeichnet, dass**
die Trennkupplung (4) als nicht anfahrfähige Trennkupplung ausgebildet ist.

9. Hybrid-Antriebsvorrichtung (101, 102) nach einem der Ansprüche 1 bis 8, **dadurch gekennzeichnet, dass**
die Trennkupplung (4) axial überlappend zu wenigstens zwei Abtriebsrädern (7, 8) auf den wenigstens zwei Vorgelegewelle (V1, V2) angeordnet ist.

## Claims

1. Hybrid drive unit (101, 102) having an internal combustion engine (2), an electric machine (3), and a transmission,
the transmission having an input shaft (5) and at least a first countershaft (V1) and a second countershaft (V2),
it being possible for the internal combustion engine (2) to be coupled directly to the input shaft (5) via a disconnect clutch (4),
six shiftable gear pairings being provided, namely a first gear pairing (RP1), a second gear pairing (RP2), a third gear pairing (RP3), a fourth gear pairing (RP4), a fifth gear pairing (RP5), and a sixth gear pairing (RP6), each having a gear wheel (Z1, Z3, Z5, Z7, Z9, Z11) arranged coaxially to the input shaft (5),
the first gear pairing (RP1) having a first gear wheel (Z1) designed as a loose wheel and arranged coaxially to the input shaft (5),
when viewed in an axial direction (a), the first shiftable gear pairing (RP1), a first shiftable element plane (SE1), the second shiftable gear pairing (RP2), the third shiftable gear pairing (RP3), the fourth shiftable gear pairing (RP4), a second shifting element plane (SE2), the fifth shiftable gear pairing (RP5), the sixth shiftable gear pairing (RP6), and an output gear plane (AE) being arranged one after the other in the specified sequence,
**characterized in that**
the first gear pairing (RP1) has a second gearwheel (Z2) designed as a loose wheel and arranged coaxially to the first countershaft (V1),
the electric machine (3) being connected to the first gear pairing (RP1) in such a way that torques, starting from the electric machine (3), can be directed into the transmission via the first gear pairing (RP1),
the second gear pairing (RP2) comprising a third gearwheel (Z3) arranged coaxially to the input shaft (5) and a fourth gear wheel (Z4) arranged coaxially to the second countershaft (V2), the third gear pairing (RP3) comprising a fifth gear wheel (Z5) arranged coaxially to the input shaft (5) and a sixth gear wheel (Z6) arranged coaxially to the second countershaft (V2), the fourth gear pairing (RP4) comprising a seventh gear wheel (Z7) arranged coaxially to the input shaft (5) and an eighth gear wheel (Z8) arranged coaxially to the first countershaft (V1), the fifth gear pairing (RP5) comprising a ninth gear wheel (Z9) arranged coaxially to the input shaft (5) and a tenth gearwheel (Z10) arranged coaxially to the second countershaft (V2), and the sixth gear pairing (RP6) comprising an eleventh gear wheel (Z11) arranged coaxially to the input shaft (5) and a twelfth gearwheel (Z12) arranged coaxially to the first countershaft (V1).

2. Hybrid drive unit (101, 102) according to claim 1,
**characterized in that**
the first gear pairing (RP1) is arranged in a last gear plane (RE1) in the axial direction (a) as viewed from the disconnect clutch (4).

3. Hybrid drive unit (101, 102) according to either claim 1 or claim 2, **characterized in that**
the electric machine (3) is arranged axially overlapping the disconnect clutch (4).

4. Hybrid drive unit (101, 102) according to claims 1, 2 or 3,
**characterized in that**
the first shifting element plane (SE1) comprises at least a third shifting element (S3) arranged coaxially to the first countershaft (V1) and a first shifting element (S1) arranged coaxially to the input shaft (5),
**and in that** the second shifting element plane (SE2) comprises at least a fifth shifting element (S5) arranged coaxially to the second countershaft (V2) and a sixth shifting element (S6) arranged coaxially to the first countershaft (V1).

5. Hybrid drive unit (101, 102) according to claim 4,
**characterized in that**
the first shifting element (S1) is provided for connection of the first gear wheel (Z1) to the input shaft (5) for conjoint rotation, the third shifting element (S3) is provided for connection of the second gear wheel (Z2) to the first countershaft (V1) for conjoint rotation, the fourth shifting element (S4) is provided for connection of the sixth gear wheel (Z6) to the second countershaft (V2) for conjoint rotation, the fifth shifting element (S5) is provided for connection of the tenth gear wheel (Z10) to the second countershaft (V2) for conjoint rotation, the sixth shifting element (S6) is provided for connection of the eighth gear wheel (Z8) to the first countershaft (V1) for conjoint rotation, and the seventh shifting element (S7) is provided for connection of the twelfth gear wheel (Z12) to the first countershaft (V1) for conjoint rotation.

6. Hybrid drive unit (101, 102) according to claim 5,
**characterized in that**
the fourth shifting element (S4) and the fifth shifting element (S5) as well as the sixth shifting element (S6) and the seventh shifting element (S7) are each designed as shifting elements having a shared sliding sleeve.

7. Hybrid drive unit (101, 102) according to any of claims 1 to 6,
**characterized in that**
the first gear pairing (RP1), the second gear pairing (RP2), the third gear pairing (RP3), and the sixth gear pairing (RP6) each form an associated pure gear plane (RE1, RE2, RE3, RE6).

8. Hybrid drive unit (101, 102) according to any of claims 1 to 7, **characterized in that**
the disconnect clutch (4) is designed as a disconnect clutch which is not able to start the engine.

9. Hybrid drive unit (101, 102) according to any of claims 1 to 8, **characterized in that**
the disconnect clutch (4) is arranged axially overlapping at least two output gears (7, 8) on the at least two countershafts (V1, V2).

## Revendications

1. Dispositif d'entraînement hybride (101, 102) comportant un moteur à combustion (2), une machine électrique (3) et une boîte de vitesses, dans lequel
la boîte de vitesses présente un arbre d'entrée (5) et au moins un premier arbre intermédiaire (V1) et un second arbre intermédiaire (V2), dans lequel
le moteur à combustion (2) peut être directement accouplé à l'arbre d'entrée (5) par l'intermédiaire d'un embrayage de séparation (4), dans lequel
sont prévues six paires de roues commutables, notamment une première paire de roues (RP1), une deuxième paire de roues (RP2), une troisième paire de roues (RP3), une quatrième paire de roues (RP4), une cinquième paire de roues (RP5) et une sixième paire de roues (RP6), comportant chacune une roue dentée (Z1, Z3, Z5, Z7, Z9, Z11) disposée coaxialement à l'arbre d'entrée (5), dans lequel
la première paire de roues (RP1) présente une première roue dentée (Z1) conçue comme une roue libre et disposée coaxialement à l'arbre d'entrée (5), dans lequel
vu dans une direction axiale (a), la première paire de roues (RP1) commutable, un premier plan d'élément de commutation (SE1), la deuxième paire de roues (RP2) commutable, la troisième paire de roues (RP3) commutable, la quatrième paire de roues (RP4) commutable, un second plan d'élément de commutation (SE2), la cinquième paire de roues (RP5) commutable, la sixième paire de roues (RP6) commutable et un plan de roue de sortie (AE) sont disposés en série l'un après l'autre dans l'ordre mentionné,
**caractérisé en ce que**
la première paire de roues (RP1) présente une deuxième roue dentée (Z2) conçue comme une roue libre et disposée coaxialement au premier arbre intermédiaire (V1),
dans lequel la machine électrique (3) est reliée à la première paire de roues (RP1) de telle sorte que des couples peuvent être introduits dans la boîte de vitesses à partir de la machine électrique (3) par l'intermédiaire de la première paire de roues (RP1),
dans lequel la deuxième paire de roues (RP2) comprend une troisième roue dentée (Z3) disposée coaxialement à l'arbre d'entrée (5) et une quatrième roue dentée (Z4) disposée coaxialement au second arbre intermédiaire (V2), la troisième paire de roues (RP3) comprend une cinquième roue dentée (Z5) disposée coaxialement à l'arbre d'entrée (5) et une sixième roue dentée (Z6) disposée coaxialement au second arbre intermédiaire (V2), la quatrième paire de roues (RP4) comprend une septième roue dentée (Z7) disposée coaxialement à l'arbre d'entrée (5) et une huitième roue dentée (Z8) disposée coaxialement au premier arbre intermédiaire (V1), la cinquième paire de roues (RP5) comprend une neuvième roue dentée (Z9) disposée coaxialement à l'arbre d'entrée (5) et une dixième roue dentée (Z10) disposée coaxialement au second arbre intermédiaire (V2) et la sixième paire de roues (RP6) comprend une onzième roue dentée (Z11) disposée coaxialement à l'arbre d'entrée (5) et une douzième roue dentée (Z12) disposée coaxialement au premier arbre intermédiaire (V1).

2. Dispositif d'entraînement hybride (101, 102) selon la revendication 1, **caractérisé en ce que**
la première paire de roues (RP1) est disposée dans une direction axiale (a) et, vu de l'embrayage de séparation (4), dans un dernier plan de roue (RE1).

3. Dispositif d'entraînement hybride (101, 102) selon la revendication 1 ou 2, **caractérisé en ce que**
la machine électrique (3) est disposée en chevauchement axial par rapport à l'embrayage de séparation (4).

4. Dispositif d'entraînement hybride (101, 102) selon la revendication 1, 2 ou 3, **caractérisé en ce que**
le premier plan d'élément de commutation (SE1) comprend au moins un troisième élément de commutation (S3) disposé coaxialement au premier arbre intermédiaire (V1) ainsi qu'un premier élément de commutation (S1) disposé coaxialement à l'arbre d'entrée (5),
**et en ce que** le second plan d'élément de commutation (SE2) comprend au moins un cinquième élément de commutation (S5) disposé coaxialement au second arbre intermédiaire (V2) et un sixième élément de commutation (S6) disposé coaxialement au premier arbre intermédiaire (V1).

5. Dispositif d'entraînement hybride (101, 102) selon la revendication 4, **caractérisé en ce que**
le premier élément de commutation (S1) est prévu pour la liaison sans possibilité de rotation de la première roue dentée (Z1) à l'arbre d'entrée (5), le troisième élément de commutation (S3) est prévu pour la liaison sans possibilité de rotation de la deuxième roue dentée (Z2) au premier arbre intermédiaire (V1), le quatrième élément de commutation (S4) est prévu pour la liaison sans possibilité de rotation de la sixième roue dentée (Z6) au second arbre intermédiaire (V2), le cinquième élément de commutation (S5) est prévu pour la liaison sans possibilité de rotation de la dixième roue dentée (Z10) au second arbre intermédiaire (V2), le sixième élément de commutation (S6) est prévu pour la liaison sans possibilité de rotation de la huitième roue dentée (Z8) au premier arbre intermédiaire (V1) et le septième élément de commutation (S7) est prévu pour la liaison sans possibilité de rotation de la douzième roue dentée (Z12) au premier arbre intermédiaire (V1).

6. Dispositif d'entraînement hybride (101, 102) selon la revendication 5, **caractérisé en ce que**
le quatrième élément de commutation (S4) et le cinquième élément de commutation (S5) ainsi que le sixième élément de commutation (S6) et le septième élément de commutation (S7) sont respectivement conçus comme des éléments de commutation ayant un manchon coulissant commun.

7. Dispositif d'entraînement hybride (101, 102) selon l'une des revendications 1 à 6,
**caractérisé en ce que**
la première paire de roues (RP1), la deuxième paire de roues (RP2), la troisième paire de roues (RP3) et la sixième paire de roues (RP6) forment respectivement un plan de roue (RE1, RE2, RE3, RE6) pur associé.

8. Dispositif d'entraînement hybride (101, 102) selon l'une des revendications 1 à 7,
**caractérisé en ce que**
l'embrayage de séparation (4) est conçu comme un embrayage de séparation ne pouvant être démarré.

9. Dispositif d'entraînement hybride (101, 102) selon l'une des revendications 1 à 8,
**caractérisé en ce que**
l'embrayage de séparation (4) est disposé sur les au moins deux arbres intermédiaires (V1, V2) en chevauchement axial par rapport à au moins deux roues de sortie (7, 8).
